# EUROPEAN PATENT APPLICATION

(11) **EP 1 482 728 A2**
(43) Date of publication of application: **01.12.2004**
(21) Application number: 04006244.0
(22) Date of filing: 16.03.2004
(51) Int. Cl.: H04N 5/782

(54) **Recording method and recording system using network**

(30) Priority: 30.05.2003 JP 2003155939
(71) Applicant: Kabushiki Kaisha Toshiba, Tokyo (JP)
(72) Inventor: Miyazaki, Koji, c/o Toshiba Corp., Int. Prop. Div., Tokyo 105-8001 (JP)
(74) Representative: Henkel, Feiler & Hänzel

(57) **Abstract**

In a system, a video recorder (10) which records a TV broadcast program from a line input, and an external tuner (50) which is present outside this recorder (10) and is connected to this recorder via a network are used. A broadcast recording schedule is registered in the recorder (10). Immediately before execution of this recording schedule, the recorder (10) registers information that instructs to transfer a TV broadcast program to be recorded, in the external tuner (50) via the network. The external tuner (50) outputs the TV broadcast program which is scheduled to be recorded to the line input of the recorder (10), on the basis of the registered command.

## Description

The present invention relates to a recording method using a recording apparatus which can schedule recordings using an electronic program guide, an external tuner which is connected to this recording apparatus via a network, and a recording system using this method.

In recent years, many TV program sites which serve TV program data have been set up on the Internet. Accordingly, some of video apparatuses (video recorders and the like) and personal computer (PC) products have a function of registering a program schedule by a simple operation using information of these TV program sites (cf. Jpn. Pat. Appln. KOKAI Publication No. 2002-135697).

In a recording scheduling process using information of TV program sites, a recording apparatus converts text information of each TV program site into select channel information and scheduled date & time information, and registers them as schedule information to implement scheduled recordings.

On the other hand, new broadcast services such as BS digital broadcast and CS digital broadcast have begun in addition to conventional analog terrestrial broadcast, and the program data on the aforementioned TV program site include program information of BS digital broadcast and the like.

In conventional recording apparatuses (DVD video recorders and the like) having functions compatible with the TV program sites, most of their built-in tuners support only analog terrestrial broadcast. Such recording apparatuses record broadcast programs (BS digital broadcast, terrestrial digital broadcast, and the like), which are not supported by their built-in tuners, by preparing a tuner compatible with such broadcast as an external apparatus, and receiving signals via an external video input.

In this case, upon scheduling a recording of a channel of broadcast (e.g., BS digital broadcast) which is not supported by a built-in tuner using a TV program site, "schedule information which is scheduled to record a signal from an external video input is registered in a recording apparatus" at the scheduled date and time as the schedule contents of the recording apparatus.

However, in order to switch a signal to be input to the external video input of the recording apparatus to the scheduled broadcast channel, a schedule that designates a scheduled date and time and channel must be additionally registered in an external tuner connected to the external video input of the recording apparatus. The user must manually make this additional registration of schedule information in the external tuner.

The present invention has been made in consideration of the above situation, and has as its object to provide a recording method which allows to register a recording schedule using an external tuner (or an external apparatus that incorporates a tuner corresponding to this external tuner) by a user-friendly operation (e.g., a scheduling operation for only a recording apparatus using an electronic program guide on the Internet), and a system using this method.

According to an embodiment of the present invention, a recording apparatus (DVD video recorder or the like) having a function of recording AV information (TV broadcast program or the like via a line input) from an external apparatus, and an external tuner (such as a BS digital tuner) which is provided outside the recording apparatus are used. A broadcast recording process (scheduled recording or the like) is registered in the recording apparatus. Before execution of this recording process, the recording apparatus registers information that instructs to transfer AV information to be recorded, in or on the external tuner. The recording apparatus executes a recording in collaboration with the external tuner when the start time of the registered recording process has been reached.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram for explaining the system arrangement in which a recording method using a network (wired LAN) according to an embodiment of the present invention is used;
FIG. 2 is a block diagram for explaining the internal arrangement of a recording apparatus (optical disc video recorder, e.g., DVD-VR recorder) according to an embodiment of the present invention;
FIG. 3 is a block diagram for explaining the internal arrangement of an external tuner (e.g., a set-top box which receives satellite and/or terrestrial digital broadcast, or a tuner section of a digital TV that incorporates a tuner which receives satellite and/or terrestrial digital broadcast) according to an embodiment of the present invention;
FIG. 4 is a block diagram for explaining the system arrangement when a plurality of recording apparatuses and a plurality of external tuners are connected on a network;
FIG. 5 is a flow chart for explaining an example of a method of pairing one recording apparatus and one external tuner when one or more recording apparatuses and one or more external tuners are connected on the network;
FIG. 6 shows an example of a menu dialog used in each external tuner to set an identification name (ID) on the network when one or more recording apparatuses and one or more external tuners are connected on the network;
FIG. 7 shows an example of a menu dialog used in each recording apparatus to set an identification name (ID) of a pairing partner (external tuner to be controlled) on the network when one or more recording apparatuses and one or more external tuners are connected on the network;
FIG. 8 is a flow chart for explaining an example of a process for registering a correspondence table between channel information obtained from an electronic program site on the Internet, and channel information of the external tuner in the recording apparatus which forms a pair with this external tuner;
FIG. 9 is a diagram for explaining network connection routes and the flow of information when a recording apparatus, external tuner, and personal computer (PC) are connected on the network via a router and the PC fetches channel information of an electronic program site on the Internet;
FIG. 10 is a diagram for explaining network connection routes and the flow of information when a recording apparatus, external tuner, and personal computer (PC) are connected on the network via a router and the PC fetches channel information of the external tuner;
FIG. 11 is a diagram for explaining network connection routes and the flow of information when a recording apparatus, external tuner, and personal computer (PC) are connected on the network via a router and the PC registers a correspondence table between channel information of the external tuner and channel information of an electronic program site on the Internet in the recording apparatus;
FIG. 12 shows an example of a PC dialog which prompts the user to select a channel of an external tuner upon generating a correspondence table between channel information of the external tuner and channel information of an electronic program site on the Internet;
FIG. 13 shows an example of a PC dialog which prompts the user to select channel information of an electronic program site, which is to be set in correspondence with the channel of user's choice of the external tuner, upon generating a correspondence table between channel information of the external tuner and channel information of an electronic program site on the Internet;
FIG. 14 is a view for explaining an example of a PC dialog which exemplifies the contents of the correspondence table after the correspondence between the channel information of the external tuner and the channel information of the electronic program site on the Internet is determined;
FIG. 15 is a flow chart for explaining an example of a method of selecting a program to be recorded from an electronic program site on the Internet, and registering the selected program information in a recording apparatus when the recording apparatus and external tuner, which are paired, are connected on the network;
FIG. 16 is a diagram for explaining network connection routes and the flow of information when a recording apparatus, external tuner, and personal computer (PC) are connected on the network via a router and the PC fetches and displays information of an electronic program site on the Internet;
FIG. 17 is a diagram for explaining network connection routes and the flow of information when a recording apparatus, external tuner, and personal computer (PC) are connected on the network via a router and the information of an electronic program site on the Internet, which is displayed on the PC and is selected by the user, is registered in the recording apparatus;
FIG. 18 is a flow chart for explaining an example of a recording process executed by a recording apparatus, in which program information selected from an electronic program site on the Internet is registered, in collaboration with an external tuner, when the recording apparatus and external tuner, which are paired, are connected on the network;
FIG. 19 is a diagram for explaining network connection routes and the flow of information when a recording apparatus and external tuner are connected on the network via a router and the recording apparatus, in which information of an electronic program site of user's choice on the Internet is registered, registers information (a recording channel, recording start time, recording end time, a transfer command of a recording program, and the like) corresponding to this registered information in the external tuner;
FIG. 20 is a diagram for explaining a case wherein AV information of a recording program is output from a line output of an external tuner to a line input of a recording device on the basis of electronic program site corresponding information (a recording channel, recording start time, recording end time, a transfer command of a recording program, and the like) which is registered from the recording apparatus in the external tuner via the network, when the recording apparatus and external tuner are connected on the network via a router;
FIG. 21 is a flow chart for explaining an example of the contents of a process (step ST42) when a transfer command is loaded from the recording apparatus to the external tuner in the recording process shown in FIG. 18;
FIG. 22 is a flow chart for explaining an example of a collaborative recording process (step ST46) between the external tuner and recording apparatus, which are paired, in the recording process shown in FIG. 18;
FIG. 23 is a flow chart for explaining the operation for eliminating a process incompatible with maintenance of tuning of a recording channel on the external tuner side; and
FIG. 24 is a diagram for explaining the system arrangement in which a recording method using a network (wired LAN) according to another embodiment of the present invention is used.

Systems (method and apparatus) according to various embodiments of the present invention will be described hereinafter with reference to the accompanying drawings.

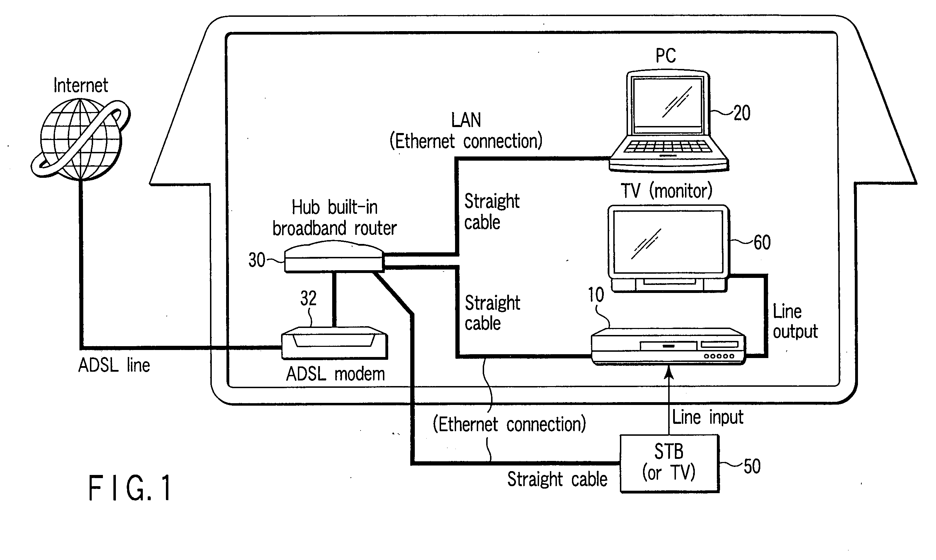

FIG. 1 is a diagram for explaining the system arrangement in which a recording method using a network (wired LAN) according to an embodiment of the present invention is used. In this example, Ethernet® is used as a home network (LAN) line. Router 30 of this network is connected to the Internet via broadband modem (ADSL modem) 32. This router 30 has a plurality of hubs, to which personal computer (PC) 20, recording apparatus (DVD-VR recorder) 10, and external tuner (set-top box STB or digital TV which incorporates a satellite and/or terrestrial digital tuner) 50 are network-connected (Ethernet-connected) via, e.g., straight cables.

In the system arrangement shown in FIG. 1, recording apparatus 10 can download electronic program information (EPG information) by accessing an electronic program guide site (Internet EPG) on a Web. The configuration method of recording apparatus 10 can be the same as that of the PC. PC 20 can similarly access the electronic program guide site (Internet EPG) on the Web. Program information or the like selected from the EPG information on the electronic program guide site at PC 20 is transferred to recording apparatus 10 on the network via router 30, and can be registered in a memory of recording apparatus 10. Note that recording apparatus 10 allows the user to select a program of his or her choice from the EPG information of the electronic program guide site by, e.g., remote controller operations, and to register the information of the selected program in its internal memory without any PC 20.

Information (e.g., a command for outputting AV information of the registered program in a registered time band, or the like) equivalent or corresponding to the program information registered in recording apparatus 10 is transferred to external tuner 50 on the network via router 30, and is registered in a memory in external tuner 50.

External tuner 50 automatically outputs AV information (video signal and audio information) of a program selected from the EPG information of the electronic program guide site on the basis of the information transferred from recording apparatus 10, when the broadcast time of that program is reached. Recording apparatus 10 automatically starts recording of the AV information from external tuner 50. When recording apparatus 10 has a digital input (IEEE1394 interface or the like) of AV information and external tuner 50 has a digital output (IEEE1394 interface or the like) of AV information, AV information can be output from external tuner 50 to recording apparatus 10 via a digital line in place of an analog line.

With the above arrangement, even recording apparatus 10 which does not incorporate any BS/CS/terrestrial digital broadcast tuner can realize automatic recording (scheduled recording using the EPG) of a BS/CS/terrestrial digital broadcast program in collaboration with an external BS/CS/terrestrial digital broadcast tuner.

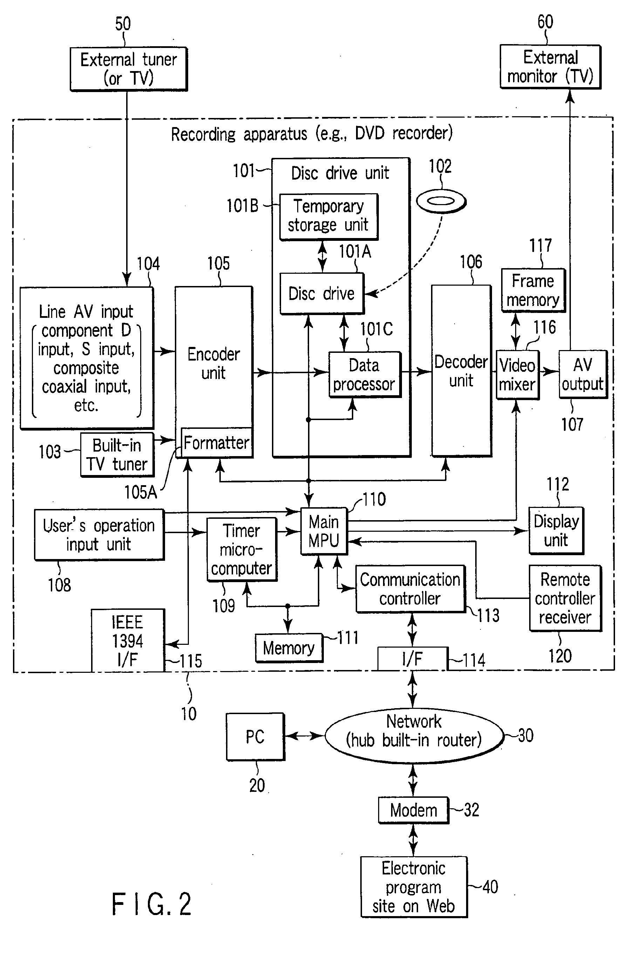

FIG. 2 is a block diagram for explaining the internal arrangement of recording apparatus (optical disc video recorder, e.g., DVD-VR recorder) 10 according to the embodiment of the present invention. This recording apparatus 10 comprises disc drive unit 101 which digitally records a TV broadcast program from built-in TV tuner (terrestrial analog TV broadcast tuner or the like) 103 or analog AV information (a playback signal of an analog video tape, an analog AV output from external tuner 50, or the like) from line AV input 104 on recordable optical disc (DVD-RAM disc, DVD-R disc, or the like) 102, and plays back recorded digital AV information from disc 102. (Note that digital recording/playback using a hard disc drive (not shown) may be used in place of or in addition to an optical disc.)

As line AV input 104 which receives analog AV information, a component D input (D1 that handles an NTSC color difference input, D2 that handles a progressive color difference input, D3 to D5 that handle Hi-vision color difference inputs, and the like), an S terminal, and/or a coaxial input that receives a composite NTSC video signal may be used.

Analog AV information (that includes video information, audio information, and other sub information as needed) from built-in TV tuner 103 or line AV input 104 is A/D-converted and MPEG-encoded in encoder unit 105, and is converted into a predetermined recording signal by formatter 105A. The converted recording signal is sent to data processor 101C of disc drive unit 101 (audio information may be encoded by linear PCM). When the recorder shown in FIG. 2 is configured as a streamer that can handle a digital input/output, digital information from IEEE1394 I/F 115 is sent to formatter 105A while skipping an MPEG encode process.

The recording signal of a digital stream sent to data processor 101C is digitally recorded on optical disc 102 loaded to disc drive 101A while using temporary storage unit (large-capacity buffer memory) 101B as needed.

Upon playback, digital information played back from disc 102 by disc drive 101A is sent to decoder unit 106 via data processor 101C. Decoder unit 106 incorporates video and audio MPEG decoders (and a linear PCM decoder as needed), and outputs a decoded digital AV signal to video mixer 116. Video mixer 116 superimposes on-screen display (OSD) information instructed by, e.g., main MPU 110, on a video picture output from decoder 106 using frame memory 117. A window display of the electronic program guide can be made using this OSD information. The video picture on which the OSD information is superimposed and an audio signal for this picture are D/A-converted into an analog signal, which is output to external monitor (or external TV) 60 via AV output (D terminal, coaxial terminal, or the like) (digital AV information before D/A conversion may be output via the IEEE1394 I/F).

Recording apparatus 10 shown in FIG. 2 also comprises input unit 108 that accepts user's operations, and remote controller receiver 120 which accepts user's remote controller operations. These user's operation commands are sent to main MPU 110, which executes processes corresponding to user's command (recording command, playback command, recording scheduling command, input switch command, channel switch command of the built-in TV tuner, and the like) using memory 111 in response to these commands. Processing states corresponding to these user's commands are displayed on display unit (fluorescent tube or liquid crystal display) 112 as needed, and/or are displayed as OSD data via video mixer 116. Display unit 112 and/or OSD can display operation information of, e.g., a recording scheduling process and the like under the control of main MPU 110.

Recording apparatus 10 shown in FIG. 2 further comprises timer microcomputer (timer MPU) 109, which is connected to main MPU 110 to support scheduled recordings using EPG and the like, and communication controller 113 and I/F 114, which are used to establish connection to the Internet via network router 30. Network router 30, modem 32, and PC 20 in FIG. 2 correspond to those with the same reference numerals in the arrangement shown in FIG. 1. "Electronic program site 40 on Web" shown in FIG. 2 is one example of information that can be obtained from the Internet shown in FIG. 1.

Timer MPU 109 saves and registers recording schedule information (EPG information) on memory 111, and executes a recording scheduling process according to the recording schedule information. MPU 110 serves as a main controller of recording apparatus 10, and has a function of acquiring and managing recording schedule information (to be described later). Memory 111 is a shared memory which is accessed by both timer MPU 109 and MPU 110, and mainly saves (registers) recording schedule information (EPG information).

Communication controller 113 is connected to the Internet or the like via network router 30 and communicates (exchanges) various kinds of information. Note that PC 20 may be a portable information terminal (or a personal digital assistant PDA) that can establish connection to the Internet or a portable phone having an Internet connection function. Electronic program site 40 on the Web corresponds to an information service site that provides EPG information (recording schedule information) via the Internet.

Note that firmware to be executed by timer MPU 109 is written in its internal ROM (not shown), and firmware to be executed by main MPU 110 is written in its internal ROM (not shown).

In the embodiment shown in FIG. 2, assume that built-in TV tuner 103 of recording apparatus 10 has no BS/CS/terrestrial digital broadcast reception function.

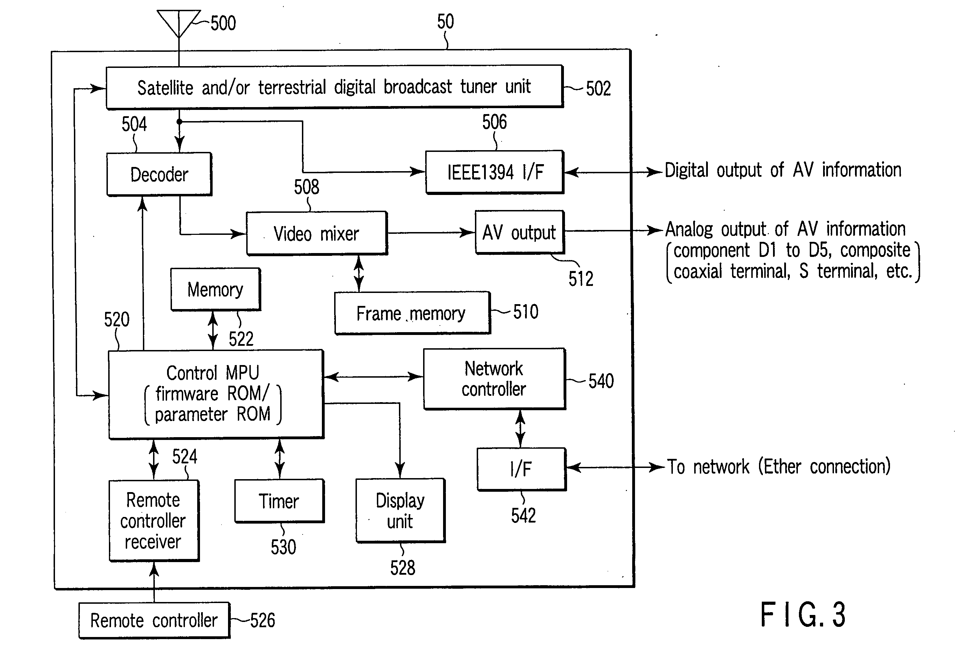

FIG. 3 is a block diagram for explaining the internal arrangement of the external tuner (e.g., a set-top box which receives satellite and/or terrestrial digital broadcast, or a tuner section of a digital TV that incorporates a tuner which receives satellite and/or terrestrial digital broadcast) according to the embodiment of the present invention. In order to give a description focusing on tuner-related units, set-top box STB which receives satellite and/or terrestrial digital broadcast will be exemplified as the external tuner.

Tuner unit 502 in the external tuner (STB) in FIG. 3 is connected to satellite antenna (and dedicated UHF antenna for terrestrial digital broadcast) 500. Tuner unit 502 has an arrangement for receiving satellite digital broadcast (BS/CS digital broadcast) and/or terrestrial digital broadcast. A digital broadcast stream (MPEG-TS or the like) received by tuner unit 502 is sent to decoder 504. Of the digital broadcast stream from tuner unit 502, digital information to be externally output is sent to IEEE1394 I/F 506 as a digital stream. Also, of the digital broadcast stream sent to decoder 504, information to be externally output after analog conversion is MPEG-decoded by decoder 504, and is then sent to video mixer 508. Video mixer 508 superimposes on-screen information (menu dialog or the like) from control MPU 520 on the MPEG-decoded broadcast picture using frame memory 510 as needed, and sends it to AV output unit 512.

AV output unit 512 A/D-converts the received broadcast picture (including on-screen information as needed), and externally outputs digital information in a predetermined signal format (e.g., a component D1 output, Y/C-separated S output, or composite coaxial output). Furthermore, AV output unit 512 outputs audio information (MPEG MP2 audio information or AAC 5.1ch multi-audio) decoded by decoder 504 as digital information or analog information after D/A conversion (a signal line of audio information is not shown).

The operations (power ON/OFF, reception channel switch setup, various kinds of output control of AV information, display control of various setup menus, and the like) of STB 50 in FIG. 3 are controlled by control MPU 520. This MPU 520 incorporates a ROM written with control firmware, and a ROM written with various control parameters. Memory 522 is connected to control MPU 520 to serve as a work area upon execution of firmware and as a temporary storage unit of various kinds of setup information. To this MPU 520, remote controller receiver 524 for receiving user's operation commands from remote controller 526, timer 530 used to detect time, display unit 528 for displaying the operation or setup state, and network controller 540 and I/F 542 required to establish connection to recording apparatus 10 in FIG. 2 via the network, are connected.

Controller 540 is set with a self identification name (tuner ID; e.g., default ID = 1), and is configured to accept only information packets specified by the self identification name (e.g., ID = 1) of information which is sent from recording apparatus 10 on the network.

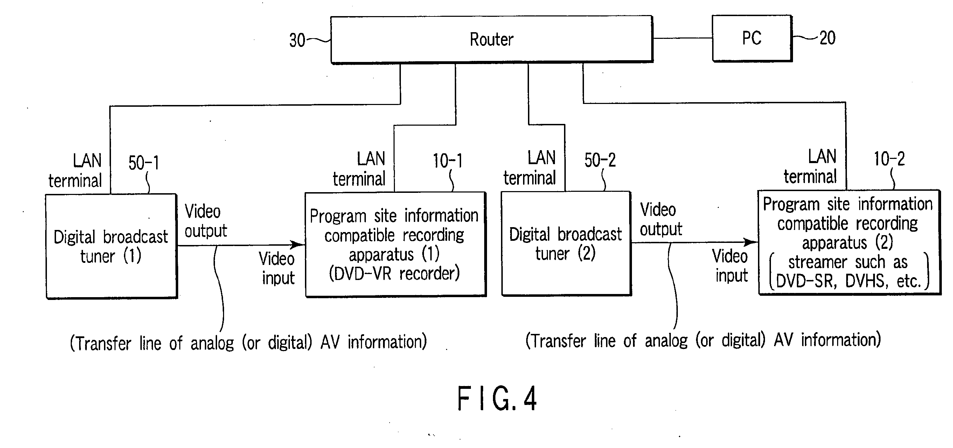

FIG. 4 is a diagram for explaining the system arrangement when a plurality of recording apparatuses (10-1, 10-2) and a plurality of external tuners (50-1, 50-2) are connected on the network.

In this case, recording apparatus 10-1 is paired with digital broadcast tuner 50-1 by setting "ID = 1", and recording apparatus 10-2 is paired with digital broadcast tuner 50-2 by setting "ID = 2". When recording apparatus 10-1 is a DVD-VR recorder which has only an analog line input, an analog video output (composite D1 output + audio output, etc.) of digital broadcast tuner 50-1 is connected to an analog video input (line AV input 104 in FIG. 2) of recording apparatus 10-1. When recording apparatus 10-2 is a streamer (DVD-SR recorder or D-VHS® recorder, or hard disc streamer) having a digital input, a digital output (IEEE1394 output, etc.) of the digital broadcast tuner 50-2 is connected to a digital input (IEEE1394 I/F 115 in FIG. 2) of recording apparatus 10-2 via a cable.

With the above connection pattern, DVD-VR recorder 10-1 which has only a terrestrial analog TV tuner can record BS digital broadcast programs, and streamer 10-2 which does not incorporate any tuner can perform stream recording of terrestrial digital broadcast programs. Furthermore, a case wherein even if recorder 10-1 incorporates a digital broadcast tuner, an AV signal from an external tuner with higher performance than the built-in tuner is to be recorded via a line input, can be coped with.

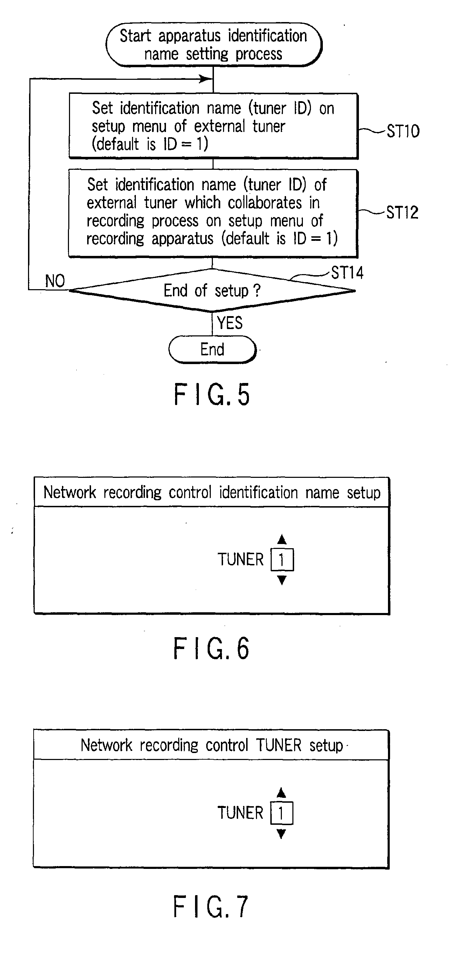

FIG. 5 is a flow chart for explaining an example of a method of pairing one recording apparatus and one external tuner when one or more recording apparatuses and one or more external tuners are connected on the network. FIG. 6 shows an example of an operation dialog (menu dialog) used in each external tuner to select and set the identification name (ID) on the network when one or more recording apparatuses and one or more external tuners are connected on the network. FIG. 7 shows an example of a menu dialog used in each recording apparatus to select and set the identification name (ID) of a pairing partner (external tuner to be controlled) on the network when one or more recording apparatuses and one or more external tuners are connected on the network.

FIG. 5 exemplifies a case wherein the user sets up apparatuses to operate the recording apparatus and external tuner in collaboration with each other.

The user sets an identification name (e.g., tuner ID = 1) used to identify the external tuner on the network using a setup menu of an external tuner (e.g., 50-1 in FIG. 4), as shown in FIG. 6 (step ST10). If the user does not make any setup, ID = 1 is set as a default value.

Next, the user sets a name (tuner ID = 1 in this case) used to identify the external tuner to be controlled on the network using a setup menu of a recording apparatus (e.g., 10-1 in FIG. 4), as shown in FIG. 7 (step ST12). In this way, recording apparatus 10-1 and external tuner 50-1 are paired. If apparatuses to be paired (e.g., recording apparatus 10-2 and external tuner 50-2 in FIG. 4) still remain (NO in step ST14), the same setup processes (e.g., setups for setting ID = 2 in steps ST10 and ST12) are executed. If no apparatuses to be paired remain (YES in step ST14), the process in FIG. 5 ends.

Upon completion of the aforementioned pairing setups, the following operations are allowed. That is, upon controlling an external tuner (e.g., 50-1 in FIG. 4) on the network, a recording apparatus (e.g., 10-1 in FIG. 4) recognizes an "external tuner (50-1) to be controlled" set in the self apparatus (10-1) using the identification name (ID = 1), and outputs a control packet containing identification name information to the external tuner (50-1) to be controlled. Upon reception of the control packet, the external tuner (50-1) detects the identification name (ID = 1) appended to that packet. If that identification name in that packet does not match the identification name (ID = 1) set in the self apparatus (50-1), the external tuner ignores this packet.

In this manner, even when a plurality of external tuners and a plurality of recording apparatuses are connected on the network, as shown in FIG. 4, "pairs of external tuners and recording apparatuses" can operate in collaboration with each other in correct combinations.

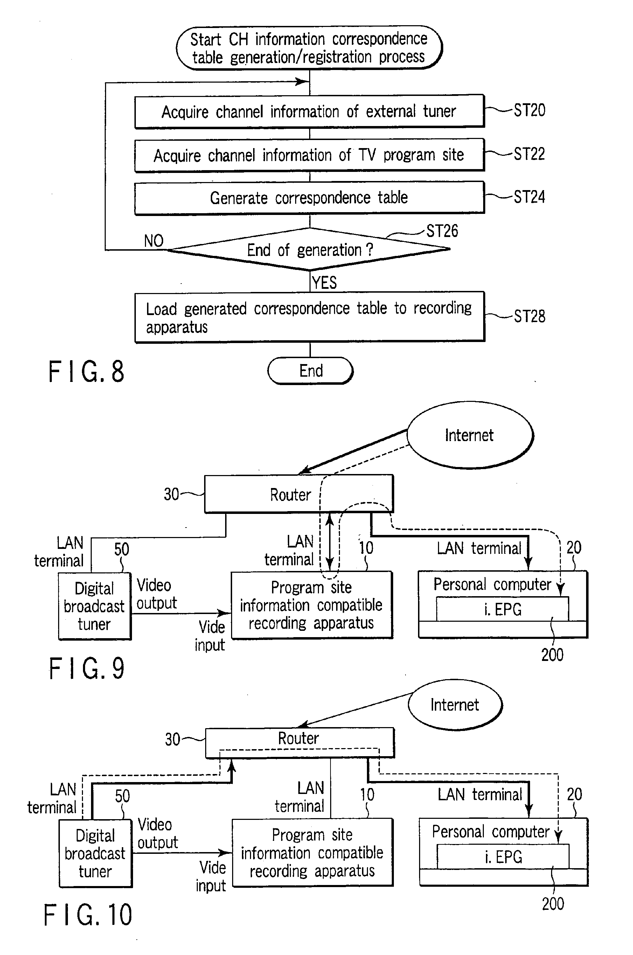

FIG. 8 is a flow chart for explaining an example of a process for registering a correspondence table between channel information obtained from the electronic program site on the Internet, and channel information of an external tuner in a recording apparatus which forms a pair with that external tuner.

The user executes a process for registering correspondence between channel CH of external tuner 50 and channel CH of TV program site 40 in recording apparatus 10. As information that allows the user to recognize specific CH in external tuner 50, a channel number and broadcast station name displayed on external tuner 50 using OSD are available. The broadcast station name to be displayed is displayed using information transmitted from a broadcast station using a broadcast wave.

On the other hand, information that allows the user to recognize specific CH in program information of TV program site 40 is a broadcast station name. The broadcast station name in this case is displayed on the basis of data that a supervisor of TV program site 40 gets from, e.g., a company that provides TV program data.

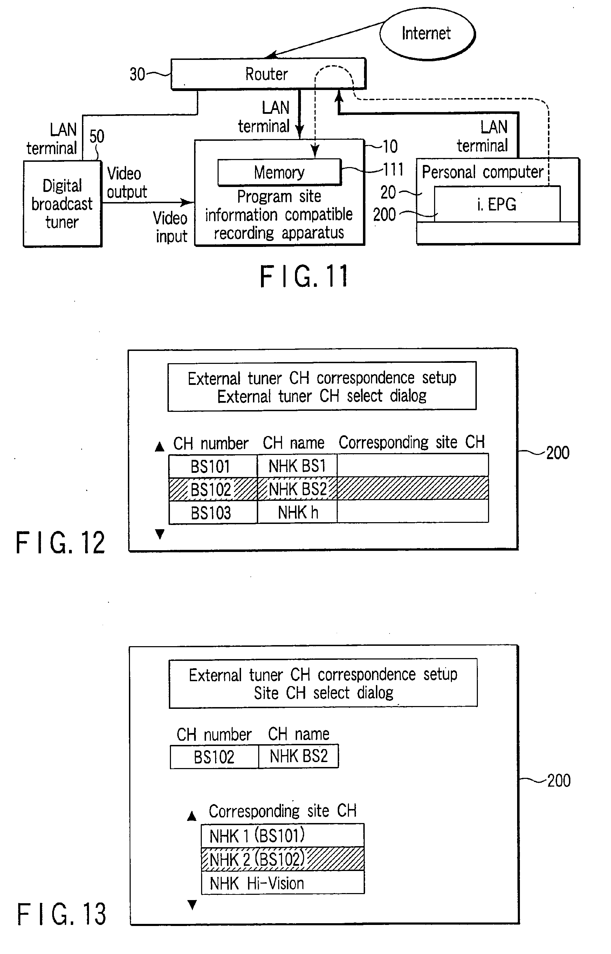

The broadcast station name on external tuner 50 does not often match that on TV program site 40 even when they indicate an identical broadcast wave in practice. Therefore, correspondence between the two names must be determined based on user's decision. A process for generating a correspondence table to this end is the process shown in FIG. 8. This process will be explained below with reference to FIGS. 9 to 11 (which show the flow of information upon determining correspondence between CH information of an external tuner and that of a TV program site) and FIGS. 12 to 14 (which show PC operation dialogs upon determining correspondence between CH information of an external tuner and that of a TV program site on the PC; examples of PC dialogs displayed in correspondence with user's operations).

The user acquires channel information of external tuner 50 (step ST20). The flow of information on the network at that time is as shown in FIG. 10. Also, dialog (setup menu dialog) 200 to be displayed on PC 20 at that time is as shown in, e.g., FIG. 12. FIG. 12 exemplifies a state wherein channel information "BS102" of external tuner 50 and corresponding channel name "NHK BS2", which are to be set in a correspondence table, are selected (correspondence is not determined yet).

The user acquires channel information of the TV program site using PC 20 (step ST22). The flow of information on the network at that time is as shown in FIG. 9. Also, dialog (setup menu dialog) 200 to be displayed on PC 20 at that time is as shown in, e.g., FIG. 13. FIG. 13 exemplifies a state wherein channel information ("NHK 2 (BS102)") of TV program site 40, which is to be set in correspondence with the selected channel information ("BS102" and corresponding channel name "NHK BS2") of external tuner 50, is selected.

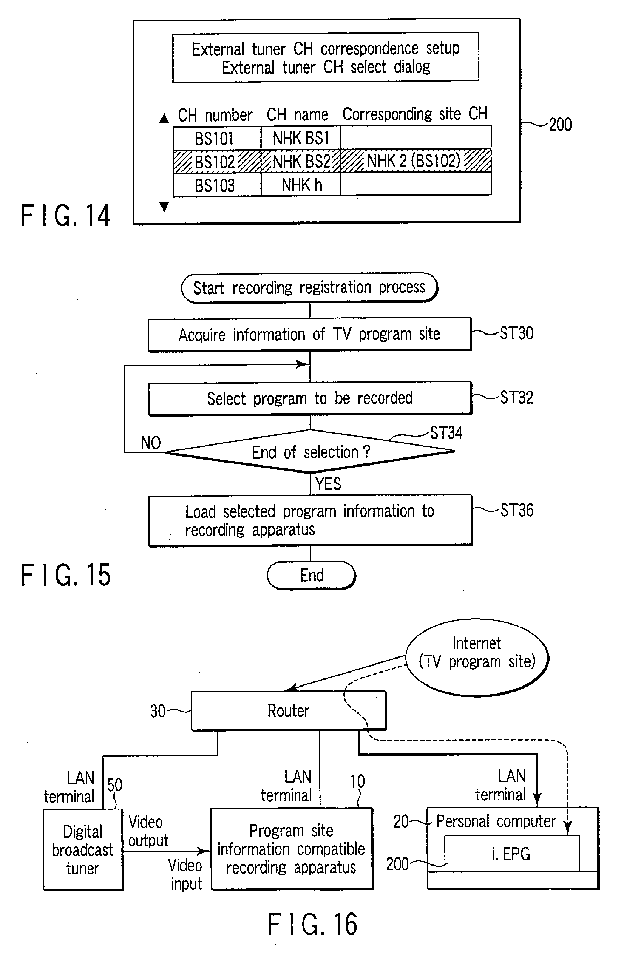

The user then selects the selected channel information ("BS102" and corresponding channel name "NHK BS2") of external tuner 50, and the channel information ("NHK 2 (BS102)") of TV program site 40 on dialog 200 of PC 20 in correspondence with each other, thus generating a correspondence table (step ST24). At this time, dialog (setup menu dialog) 200 displayed on PC 20 is as shown in, e.g., FIG. 14 (a dialog that reflects correspondence associated with BS102). This generation process is repeated in correspondence with the number of channels to be set in the correspondence table (NO in step ST26).

Upon completion of generation of the correspondence table (YES in step ST26), data of the completed correspondence table is loaded (registered) from PC 20 onto internal memory (a given area of memory 111 in FIG. 2) of recording apparatus 10 (step ST28). The flow of information at that time is as shown in FIG. 11.

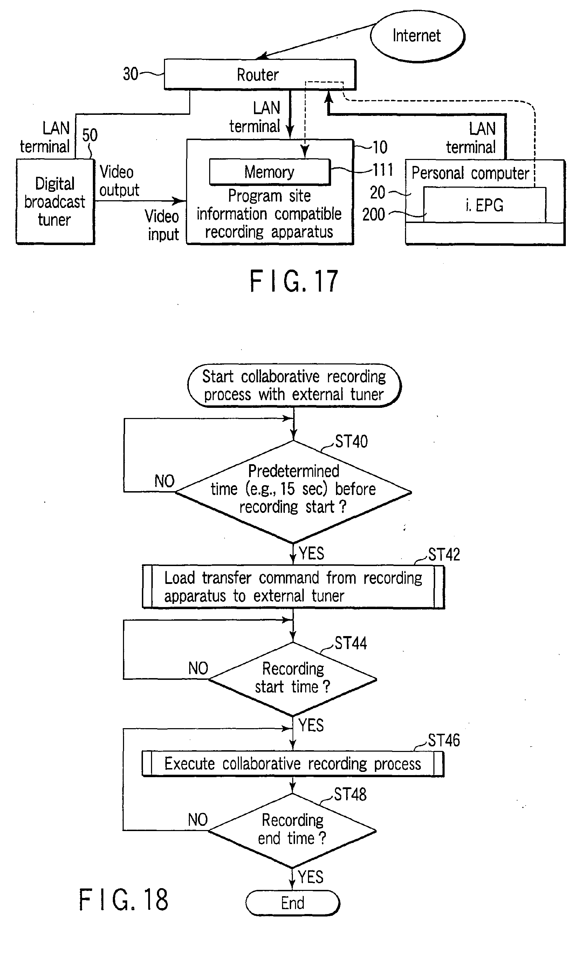

FIG. 15 is a flow chart for explaining an example of a method of selecting a "program to be recorded" from electronic program site 40 on the Internet and registering the selected program information in recording apparatus 10 when recording apparatus 10 and external tuner 50, which are paired, are connected on the network. FIGS. 16 and 17 show the flow of information from when the user searches TV program site 40 for a desired program until he or she registers its recording schedule.

In order to register a program to be recorded from electronic TV program site 40 on the Internet, electronic TV program information is acquired from this site 40 onto PC 20 (step ST30). The flow of information on the network at that time is as shown in FIG. 16. As a result, the electronic TV program guide of that site is displayed on screen 200 of PC 20.

The user searches for a program to be recorded while browsing program information displayed on screen 200. If the user finds a program to be recorded from that program information, he or she selects a desired program by a simple operation, e.g., by clicking a mouse button of PC 20 (step ST32). This selection operation is repeated in correspondence with the number of desired programs (NO in step ST34). Upon completion of selection (YES in step ST34), the user clicks a "register button" (not shown) on screen 200 of PC 20 using the mouse, thereby loading the selected program information onto memory 111 of recording apparatus 10 (step ST36). The flow of information on the network at that time is as shown in FIG. 17. In this manner, recording information (recording schedule information) selected from electronic TV program site 40 on the Internet is registered in recording apparatus 10.

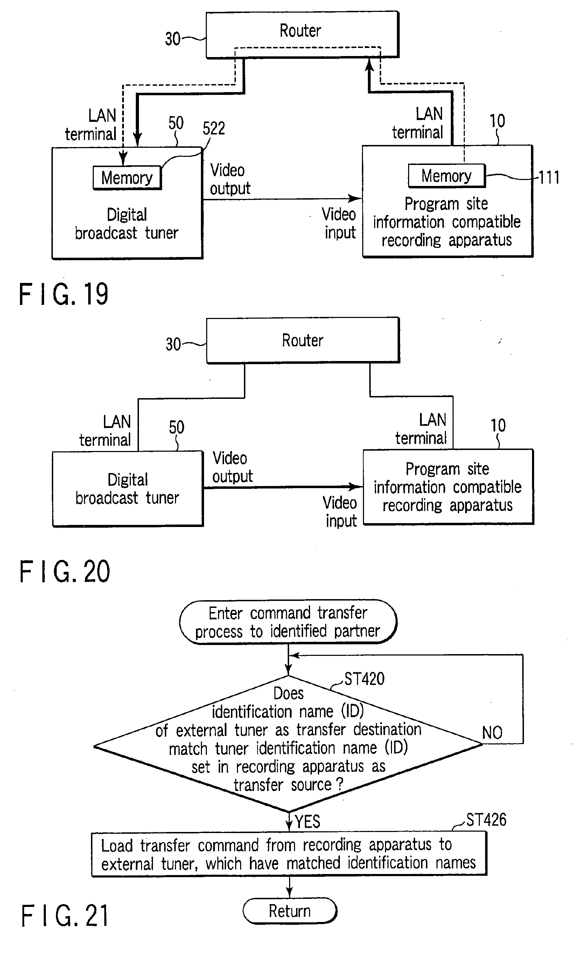

FIG. 18 is a flow chart for explaining an example of a recording process executed by the recording apparatus, in which program information selected from the electronic program site on the Internet is registered, in collaboration with the external tuner, when the recording apparatus and external tuner, which are paired, are connected on the network. FIGS. 19 and 20 show the flow of information when recording apparatus 10 and external tuner 50 execute a recording operation in collaboration with each other.

Recording apparatus 10 has timer MPU 109, as shown in FIG. 2, and external tuner 50 which collaborates with this recording apparatus 10 has timer 530, as shown in FIG. 3. Hence, recording apparatus 10 and external tuner 50 can always detect the current time as long as their own timers are correctly set (although some errors are permitted). Recording apparatus 10 can determine based on the recording start time of the recording information registered in its memory 111 when it must start recording.

Since apparatus operations have some time lag and the actual times of the timers have some errors, recording apparatus 10 loads a transfer command of AV information to be recorded (step ST42) at a predetermined time (e.g., at a time about 15 seconds before the start time) before the recording start time (YES in step ST40). The flow of information on the network at this time is as shown in FIG. 19. With this process, information (channel information of site 40 has been converted into a corresponding channel number of external tuner 50 via the correspondence table shown in FIG. 14) corresponding or equivalent to recording information (recording schedule information) stored in memory 111 of recording apparatus 10 is stored in internal memory 522 of external tuner 50. In this manner, the MPUs of recording apparatus 10 and external tuner 50, which are paired (matching of their IDs has been detected by the process in FIG. 5), can detect a broadcast channel to be recorded and its recording start time from the program information stored in their memories.

If the recording start time is reached (YES in step ST44), recording apparatus 10 and external tuner 50, which are paired, execute a recording process in collaboration with each other (step ST46). That is, external tuner 50 tunes the designated channel based on the recording information registered from recording apparatus 10 via the network, and outputs a video output of a broadcast program of that channel within the designated time band. This collaborative recording operation continues until the recording end time in the recording schedule information stored in the memories of both recording apparatus 10 and external tuner 50 is reached (NO in step ST48). The flow of AV information to be recorded at that time is as shown in FIG. 20 (line connection from the video output of digital tuner 50 to the video input of recording apparatus 10).

According to the collaborative process shown in FIG. 18, after the recording information is registered from recording apparatus 10 in external tuner 50 (step ST42) immediately before the recording start time, the recording information is consolidated in recording apparatus 10 until a time immediately before the recording start time. That is, user's operations such as browsing, registration, deletion, and the like of the recording information are done at recording apparatus 10, and the user need not make similar operations for external tuner 50.

Note that the "predetermined time before recording start" in step ST40 is not limited to the aforementioned time 15 seconds before the start time. This time is merely an example, and a time of 5 seconds or 5 minutes may be set. Since the recording schedule information is to be consolidated on the recording apparatus 10 side, it is not preferable to set this time too early (e.g., several hours or days) before the recording start time. However, when external tuner 50 and/or recording apparatus 10 must be disconnected from the network during a given period that overlaps a scheduled recording time (for example, when the number of hubs of router 30 is limited, and a hub for external tuner 50 and/or recording apparatus 10 must be used for another purpose), the recording schedule information must be transferred from recording apparatus 10 to external tuner 50 before disconnection. In this case, the predetermined time in step ST40 can be set considerably before the recording start time. Once the same (or corresponding) recording schedule information as (to) that in the memory of recording apparatus 10 is stored in the memory of external tuner 50, external tuner 50 can output AV information which is scheduled to be recorded to the line input of recording apparatus 10. Hence, even when external tuner 50 and/or recording apparatus 10 are/is disconnected from the network, the collaborative scheduled recording operation between them can be performed without any problem.

FIG. 21 is a flow chart for explaining an example of the contents of the process (step ST42) when a transfer command is loaded from the recording apparatus to the external tuner in the recording process shown in FIG. 18.

MPU 520 of external tuner 50 checks if its identification name (e.g., ID = 1 set in step ST10 in FIG. 5) as the transfer destination of the recording schedule information matches the identification name (e.g., ID = 1 set in step ST12 in FIG. 5) which is appended to a packet sent via the network and is set at recording apparatus 10 as the transfer source (step ST420). If the two names match (YES in step ST420), MPU 520 of external tuner 50 determines that a packet sent via the network is addressed to itself. Then, a transfer command (a command that instructs to transfer a broadcast program of xxx channel from yyy o'clock to zzz o'clock) based on the recording schedule information is loaded from recording apparatus 10 to external tuner 50, whose identification names match (step ST426).

If the identification name (e.g., ID = 1) of external tuner 50 does not match the identification name (e.g., ID = 2) set at recording apparatus 10 as the transfer source (NO in step ST420), a packet sent via the network is ignored, and MPU 520 of external tuner 50 waits for a packet whose identification name matches (loop of NO in step ST420). In this manner, even when a plurality of external tuners and a plurality of recording apparatuses are connected on the network, as shown in FIG. 4, "pairs of external tuners and recording apparatuses" can operate in collaboration with each other in correct combinations.

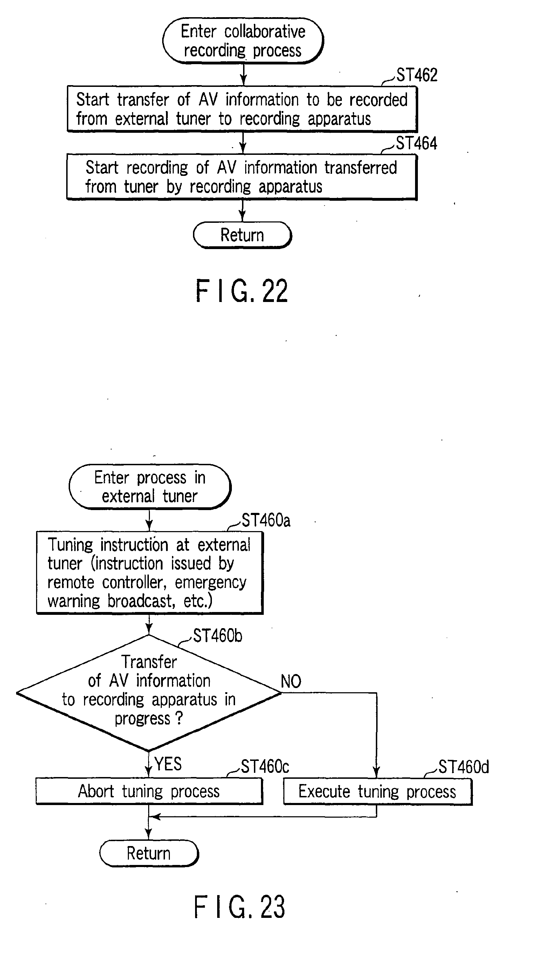

FIG. 22 is a flow chart for explaining an example of the collaborative recording process (step ST46) between the external tuner and recording apparatus, which are paired, in the recording process shown in FIG. 18. FIG. 23 is a flow chart for explaining the operation for eliminating a process incompatible with maintenance of tuning of a recording channel on the external tuner side.

During the recording operation period, external tuner 50 executes exclusive control so as to eliminate a process which is incompatible with maintenance of tuning of the recording channel (a process that may result in a recording failure), and maintains tuning of the recording channel. That is, in the process shown in FIG. 23, if a tuning instruction at the external tuner is issued (step ST460a), it is checked if transfer of AV information from external tuner 50 to recording apparatus 10 is in progress at that time. If transfer is in progress (YES in step ST460b), it is determined that the tuning instruction in step ST460a is a "process which is incompatible with maintenance of tuning of the recording channel (a process that may result in a recording failure)", and the process of the tuning instruction is aborted (step ST460c). On the other hand, if transfer is not in progress (NO in step ST460b), it is determined that the tuning instruction in step ST460a is a "process which is compatible with maintenance of tuning of the recording channel (a process that does not result in a recording failure)", and the process of the tuning instruction is executed (step ST460d).

Examples of the process which is incompatible with maintenance of tuning of the recording channel (a process that may result in a recording failure) in external tuner 50 during the recording operation period includes an operation for the external tuner main body using remote controller 526 or the like of external tuner 50, an automatic process (e.g., emergency warning broadcast in BS digital broadcast) designated from a broadcast wave, and the like.

AV information of a broadcast program to be recorded begins to be transferred from external tuner 50 to recording apparatus 10 while tuning of the recording channel is maintained during recording (during transfer of AV information to recording apparatus 10) by the process in FIG. 23 (step ST462 in FIG. 22). Recording apparatus 10 then begins to record the transferred AV information (line input) (step ST464 in FIG. 22). After that, the control returns to step ST48 in FIG. 18, and the collaborative recording process between external tuner 50 that "maintains tuning of the recording channel" and recording apparatus 10 is maintained until the recording end time in the schedule information set in their memories is reached.

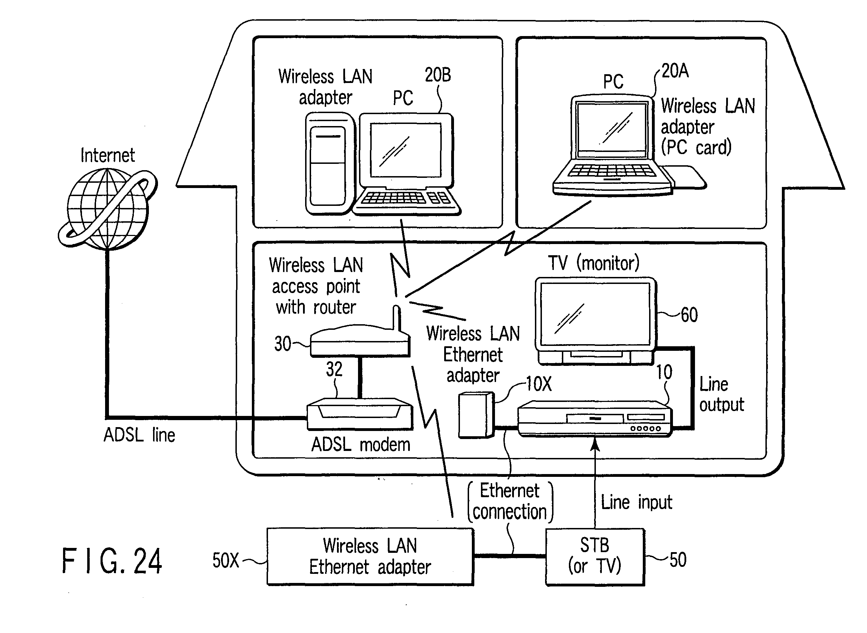

FIG. 24 is a diagram for explaining the system arrangement in which a recording method using a network (wired LAN) according to another embodiment of the present invention is used. In FIG. 24, wireless LAN cards and wireless LAN adapters (10x, 50x) are used in combination in place of a network built by connecting cables to router 30, thus building the same network as in FIG. 1 as a wireless network. When the network is built via a wireless LAN, as shown in FIG. 24, the collaborative recording process shown in FIG. 18 can be realized between recording apparatus 10 which is set at the first floor of a given house and external tuner 50 which is set at the second floor.

### <Summary of Embodiments>

### *Basic points are as follows.

(01) Recording information is registered from a recording apparatus, in which recording information is registered, in an external tuner via a network.
(02) The recording information to be registered in the external tuner includes at least:
   (a) information used to designate a channel to be tuned (e.g., Network ID and Service ID); and
   (b) recording date & time information (e.g., the recording start date and recording start time and/or recording period).
(03) The user manually determines correspondence between CH information of the external tuner and that of the TV program site, and registers it in the recording apparatus. When the recording apparatus registers recording information in the external tuner, it designates a channel to be tuned in the form of CH information of the external tuner on the basis of this correspondence information.
(04) The "identification name for a control target apparatus" is set for the external tuner, and the "identification name of an apparatus to be controlled" is set for the recording apparatus. The external tuner processes only a control packet addressed to itself, and the recording apparatus outputs a control packet to only the apparatus to be controlled. In this way, even when one or more external tuners and one or more recording apparatuses are connected on the network, they can operate in combinations which are set (paired) in advance.

### **Peripheral points are as follows.

(11) The recording apparatus in which recording information is registered registers the recording information in the external tuner via the network immediately before the recording start time.
(12) The external tuner maintains tuning of a recording channel during a period which is scheduled to execute recording, and does not execute any processes which are incompatible with maintenance of tuning of the recording channel (e.g., an operation for the external tuner main body using a remote controller or the like of the external tuner, an automatic process (e.g., emergency warning broadcast in BS digital broadcast) designated from a broadcast wave, and the like).

### <Summary of Effects According to Embodiments>

According to the embodiments of the present invention, the following effects are expected.
(A) A recording setup of a broadcast program, which is not supported by a recording apparatus alone, can be easily made using convenient information such as TV program site information on the Internet.
(B) Since information is given to an external tuner immediately before execution of recording, only the recording apparatus can exclusively manage recording information.
(C) Even when a plurality of external tuners and a plurality of recording apparatuses are connected on the network, they can operate in combinations which are set in advance.
(D) The user himself or herself determines correspondence between a plurality of types of information having different formats (information indicating broadcast channels), and recording of a channel that the user wants can be reliably executed.
(E) Since the external tuner securely maintains tuning of a recording channel during a recording period, recording failures can be prevented.
(F) Schedule information which is registered in the recording apparatus using electronic program information on the Web is sent to the external tuner (BS digital tuner or the like) via the network. When the scheduled time is reached, the external tuner transfers AV information of a broadcast (BS digital broadcast or the like) which cannot be received by the recording apparatus alone to the line input of the recording apparatus on the basis of the received schedule information. For this reason, the user need only schedule recordings in the recording apparatus using the electronic program information on the Web, and need not execute any extra schedule process for the external tuner that receives a broadcast which cannot be received by this recording apparatus itself.

Note that the present invention is not limited to the aforementioned embodiments, and various modifications may be made without departing from the scope of the invention when it is practiced. For example, the embodiment shown in FIG. 1 and the like uses Ethernet® as the network connection between recording apparatus 10 and external tuner 50. However, this network connection may use other lines as long as it can send a recording channel, recording start time, recording end time, transfer command of a program to be recorded from recording apparatus 10 to external tuner 50. For example, network connection from recording apparatus 10 to external tuner 50 may use IEEE1394, USB (Universal Serial Bus), RS232C, and the like. Also, a transfer command to be sent from recording apparatus 10 to external tuner 50 is not limited to the one (e.g., "recording schedule") which is sent immediately before the recording start time. This command can be output from recording apparatus 10 to external tuner 50 when the user wants to start recording right now (on-time recording). The respective embodiments may be combined as needed as long as such combinations are possible, and combined effects can be obtained in such case.

Furthermore, the embodiments include inventions of various stages, and various inventions can be extracted by appropriately combining a plurality of disclosed required constituent elements. For example, even when one or a plurality of required constituent elements are omitted from all required constituent elements described in the embodiment, an arrangement from which the required constituent elements are omitted can be extracted as an invention as long as at least one of the effects of the present invention or the effects obtained upon practicing the present invention can be obtained.

As described above, according to the present invention, since "transfer command information or the like of AV information to be registered is registered from the recording apparatus side in the external tuner", a scheduled recording process using the external tuner (or an external apparatus that incorporates a tuner equivalent to this external tuner) can be made by simple user's operations (e.g., a scheduling operation for only the recording apparatus using an electronic program guide on the Internet; the need for an independent scheduling operation for the external tuner can be omitted).

## Claims

1. A recording method configured to be used with a recording apparatus which has a function of recording AV information from an external apparatus, and with an external tuner which is provided outside the recording apparatus, **characterized by** comprising:
registering (ST36 in FIG. 15) a recording process (such as scheduled recording) of a broadcast program in the recording apparatus; and
registering (ST42 in FIG. 18), when the recording process is registered in the recording apparatus, information that instructs to transfer AV information to be recorded upon execution of that recording process by the recording apparatus, from the recording apparatus to the external tuner.

2. A recording method according to claim 1, wherein said external tuner is configured to be connected to the recording apparatus via a network and configured to receive a broadcast program that cannot be received by the recording apparatus alone, said method **characterized by** further comprising:
registering (ST36 in FIG. 15) a prescribed recording process of the broadcast program, which cannot be received by the recording apparatus alone, in the recording apparatus; and
registering (ST42 in FIG. 18), when the prescribed recording process is registered in the recording apparatus, information that instructs to transfer AV information to be recorded upon execution of that prescribed recording process by the recording apparatus, from the recording apparatus to the external tuner via the network.

3. A recording method according to claim 1, wherein said recording apparatus is configured to have a function of recording AV information from an external apparatus using TV program site information on an Internet, and said external tuner is configured to be connected to the recording apparatus via a network and configured to receive a broadcast program that cannot be received by the recording apparatus alone, said method **characterized by** further comprising:
registering (ST36 in FIG. 15) a given recording process of the broadcast program, which cannot be received by the recording apparatus alone, in the recording apparatus; and
registering (ST42 in FIG. 18), when the given recording process is registered in the recording apparatus, information that instructs to transfer AV information to be recorded upon execution of that given recording process, from the recording apparatus to the external tuner via the network.

4. A recording method according to claim 1, wherein at least one said recording apparatus is configured to have a function of recording AV information from an external apparatus, and at least one said external tuner is configured to be connected to the recording apparatus via a network and configured to receive a broadcast program that cannot be received by the recording apparatus alone, said method **characterized by** further comprising:
setting (ST10 in FIG. 5) an identification name for a control target apparatus in one external tuner;
setting (ST12 in FIG. 5) an identification name of an apparatus to be controlled in one recording apparatus;
registering (ST36 in FIG. 15) a specific recording process of the broadcast program, which cannot be received by the recording apparatus alone, in the recording apparatus which forms a combination with the external tuner, whose identification name of the control target apparatus matches the identification name of the apparatus to be controlled; and
registering (ST42 in FIG. 18), when the specific recording process is registered in the recording apparatus of the combination, information that instructs to transfer AV information to be recorded upon execution of that specific recording process by the recording apparatus of the combination, from the recording apparatus of the combination, to the external tuner of the combination, via the network.

5. A recording method according to claim 4, **characterized in that** only when the identification name for the control target apparatus matches the identification name of the apparatus to be controlled (ST420 yes in FIG. 21), the information that instructs to transfer AV information to be recorded upon execution of that recording process is registered in the external tuner as the control target apparatus (ST426 in FIG. 21).

6. A recording method according to claim 1, wherein said external tuner is configured to be connected to the recording apparatus via a network and configured to receive a broadcast program that cannot be received by the recording apparatus alone, said method **characterized by** further comprising:
registering (ST36 in FIG. 15) a predetermined recording process of the broadcast program, which cannot be received by the recording apparatus alone, in the recording apparatus; and
registering (ST42 in FIG. 18), when the predetermined recording process is registered in the recording apparatus, information that instructs to transfer AV information to be recorded upon execution of that predetermined recording process by the recording apparatus, from the recording apparatus to the external tuner via the network, before an execution time of the registered predetermined recording process.

7. A recording method according to claim 1, wherein said recording apparatus is configured to a function of recording AV information from an external apparatus using TV program site information on an Internet, and said external tuner is configured to be connected to the recording apparatus via a network and configured to receive a broadcast program that cannot be received by the recording apparatus alone, said method **characterized by** further comprising:
registering (ST28 in FIG. 8) a correspondence table between channel information included in the TV program site information and channel number information of the external tuner corresponding to this channel information in the recording apparatus;
registering (ST36 in FIG. 15) a pre-arranged recording process of the broadcast program, which cannot be received by the recording apparatus alone, in the recording apparatus; and
registering (ST42 in FIG. 18), when the pre-arranged recording process is registered in the recording apparatus, information that instructs to transfer AV information to be recorded upon execution of that pre-arranged recording process as well as information, which is obtained by converting the channel information included in the TV program site information into the channel number information of the external tuner based on the correspondence table, from the recording apparatus to the external tuner via the network.

8. A recording method according to claim 1, wherein said recording apparatus is configured to have a function of recording AV information from an external apparatus using TV program site information on an Internet, and an external tuner is configured to be connected to the recording apparatus via a network and configured to receive a broadcast program that cannot be received by the recording apparatus alone, said method **characterized by** further comprising:
registering (ST36 in FIG. 15) a planned recording process of the broadcast program, which cannot be received by the recording apparatus alone, in the recording apparatus;
registering (ST42 in FIG. 18), when the planned recording process is registered in the recording apparatus, information that instructs to transfer AV information to be recorded upon execution of that planned recording process, from the recording apparatus to the external tuner via the network; and
ignoring or inhibiting or disabling (ST460c in FIG. 23) a process incompatible with maintenance of tuning of the external tuner during execution of the recording process.

9. A recording apparatus **characterized by** comprising:
a network interface (114 in FIG. 2) configured to be connected, via a network (e.g., "Ether(R) LAN" in FIG. 1), to an external tuner that is configured to output AV information of a reception channel according to an external command;
an input terminal (104/115 in FIG. 2) configured to receive the AV information output from the external tuner;
a timer (109 in FIG. 2) configured to provide time information indicating a current time;
a recording registration information memory (a part of 111 in FIG. 2) configured to store recording registration information which contains reception channel information and recording start time information;
a control unit (110 in FIG. 2; ST42 in FIG. 18) configured to transfer information corresponding to the recording registration information stored in the recording registration information memory to the external tuner together with the external command via the network; and
a recording unit (105/101 in FIG. 2) configured to record the AV information received from the external tuner via the input terminal.

10. A recording apparatus according to claim 9, **characterized by** further comprising:
an identification information memory (another part of 111 in FIG. 2) configured to store identification information corresponding to that of the external tuner, wherein
said control unit (110) is configured to transfer information corresponding to the recording registration information stored in the recording registration information memory (111) to the external tuner (50), which has identification information corresponding to the identification information stored in the identification information memory, together with the external command via the network.

11. A recording apparatus according to claim 9, **characterized by** further comprising:
a correspondence table memory (still another part of 111 in FIG. 2) which stores a correspondence table between channel information (e.g., "NHK 2(BS102)") contained in the TV program site information and channel number information (e.g., "BS102") of the external tuner corresponding to this channel information, wherein
said recording registration information memory (a part of 111 in FIG. 2) is configured to store, as the recording registration information, reception channel information corresponding to TV program site information on an Internet and recording start time information, and
said control unit (110) is configured to transfer information corresponding to the recording registration information stored in the recording registration information memory (111) as well as information, which is obtained by converting the channel information contained in the TV program site information into the channel number information of the external tuner in accordance with the correspondence table, to the external tuner (50) together with the external command via the.network.

12. A tuner apparatus or an image receiving apparatus which incorporates the tuner apparatus (e.g., STB/TV 50 in FIG. 1 or FIG. 23), **characterized by** comprising:
a network interface (525 in FIG. 3) configured to be connected, via a network, to a recording apparatus (10) that outputs a command which instructs to output AV information of a predetermined reception channel at a predetermined time; and
a terminal (506 in FIG. 3) configured to output the AV information of the predetermined reception channel at the predetermined time upon reception of the command from the recording apparatus via the network.

13. A tuner or image receiving apparatus according to claim 12, **characterized by** further comprising:
a control unit (520 in FIG. 3) configured to inhibit or disable a process being incompatible with maintenance of output of the AV information during output of the AV information of the predetermined reception channel based on the command from the recording apparatus.
